# EUROPEAN PATENT APPLICATION

(11) **EP 2 977 105 A2**
(43) Date of publication of application: **27.01.2016**
(21) Application number: 15174416.6
(22) Date of filing: 30.06.2015
(51) Int. Cl.: B02C 18/14, B02C 18/18

(54) **ROTARY REDUCING MACHINE HAVING REDUCING ELEMENTS MOUNTED IN A PLURALITY OF BALANCED GROUPS**

(30) Priority: 30.06.2014 US 201462018984 P
(71) Applicant: Vermeer Manufacturing Company, Pella, IA 50219-0200 (US)
(72) Inventor: DAINING, Stephen, Pella, Iowa US-50219 (US); MUFF, David, Pella, IA Iowa US-50219 (US); WEINBERG, Clint, Pella, IA Iowa US-50219 (US); HE, Kun, Pella, IA Iowa US-50219 (US)
(74) Representative: Mozzi, Matteo

(57) **Abstract**

A material reducing apparatus may be provided. The material reducing apparatus may include a rotor structure for driving rotation of the rotary reducing component. The rotary reducing component includes a first set of reducing component elements and a second set of reducing component elements, each with distinct characteristics. The first set of reducing elements can be carried by the rotor structure within first mounting locations such that the first set of reducing elements is balanced as a set relative to the axis of rotation. The rotary reducing component further includes a second set of reducing elements carried by the rotor structure within second mounting locations such that the second set of reducing elements is balanced as a set relative to the axis of rotation. In certain examples, multiple sets of reducing elements may coexist within the rotary reducing component, each with distinct characteristics.

## Description

### TECHNICAL FIELD

The present disclosure relates generally to machines for reducing material. In particular, the present disclosure relates to material reducing machines that include reducing elements.

### BACKGROUND

Material reducing machines are machines used to reduce the size of material by processes such as mulching, chipping, grinding, cutting or like actions. A typical material reducing machine includes a rotary reducing component that reduces material as the material reducing component rotates about a central axis. In certain examples, the rotary reducing component includes a main rotating body (e.g., a rotor, drum, plate stack, or like structures) and a plurality of reducing elements carried by the main rotating body. In certain examples, the reducing elements are positioned about a circumference of the main rotating body and are configured to define a circular cutting boundary as the rotary reducing component is rotated about its central axis.

Two common types of material reducing machines include grinders and chippers. Grinders (e.g., tub grinders and horizontal grinders) are typically configured to reduce material through blunt force impactions. In contrast to the blunt force action used by grinders, chippers reduce material through a chipping action. Grinders typically include reducing hammers on which replaceable grinding cutters (i.e., grinding tips or grinding elements) are mounted. Grinding cutters generally have relatively blunt ends suitable for reducing material through blunt force impactions. In contrast to the grinding cutters used on grinders, chippers typically include relatively sharp chipping knives configured to reduce material through a cutting/slicing action, as opposed to a grinding action. An advantage of grinders is that grinders are generally suited to better tolerate wear than chippers, without unduly negatively affecting the performance of the grinders and quality of the product output by the grinders. An advantage of chippers is that the sharpness of the chipping knives allows certain materials (e.g., trees) to be processed more rapidly with less power than would typically be required by a grinder.

A forestry mower (i.e., a mulcher) is another example of a material reducing machine. A forestry mower typically includes a vehicle such as a tractor or skid-steer vehicle. A mulching head is coupled to the vehicle (e.g., by a pivot arm or boom). The mulching head includes a rotary reducing component often including a rotating drum that carries a plurality of reducing elements (i.e., cutters, cutting elements, cutting structures). Examples of reducing elements can include planar style cutters having elongated, relatively sharp edges, blunt edge cutters often formed of carbide tiles, hardfaced grit cutters with blunt edges, or like structures. The mulching head can be raised and lowered relative to the vehicle and can also be pivoted/tilted forwardly and backwardly relative to the vehicle. By raising the mulching head and tilting the mulching head back, the forestry mower can be used to strip branches from trees and other aerial applications. By lowering the mulching head and pivoting the mulching head forward, the forestry mower can readily be used to clear brush, branches and other material along the ground.

In rotary reducing machines, it is important for the rotary reducing component to be dynamically and statically balanced. Such balancing prevents such vibration force or motion from being imparted to the bearings of the rotary reducing component as a result of centrifugal forces associated with the rotary reducing component. Balancing of a rotary reducing component includes balancing of the reducing elements carried by the rotor (e.g., drum, plates, etc.) about the axis of rotation of the rotor.

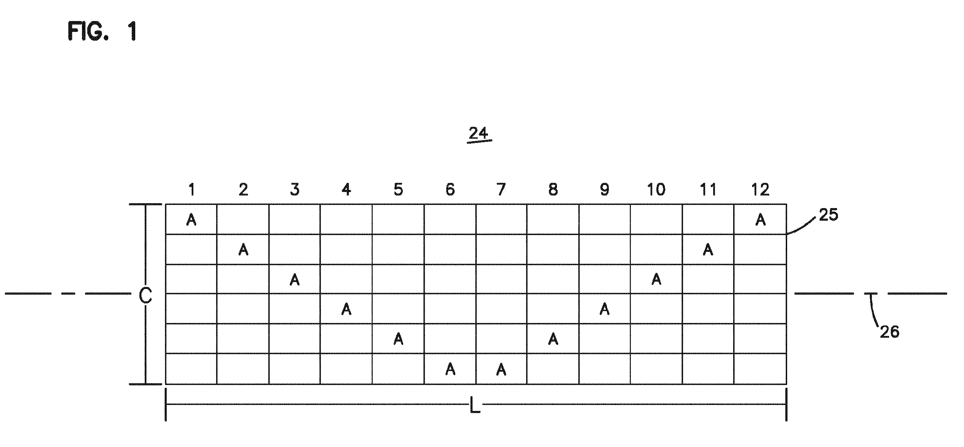

Figure 1 illustrates an example reducing element layout for a rotary reducing component 24 of a forestry mower. The rotary reducing component 24 includes a drum 25 and a plurality of reducing elements A carried by the drum 25. Figure 1 is a laid-flat view of the rotary reducing component 24, where L represents a length of the drum 25 and C represents a circumference of the drum 25. The rotary reducing component 24 has a plurality of cutting paths (labeled 1-12) spaced along an axis of rotation 26 of the rotary reducing component 24. Each of the cutting paths 1-12 includes a single one of the reducing elements A. Thus, during reducing, each path makes only one impact per revolution of the drum 25. The reducing elements A are arranged in a chevron (i.e., V-shaped) pattern. All of the reducing elements A are identical to each other. The reducing elements A are collectively statically and dynamically balanced relative to the axis of rotation 26

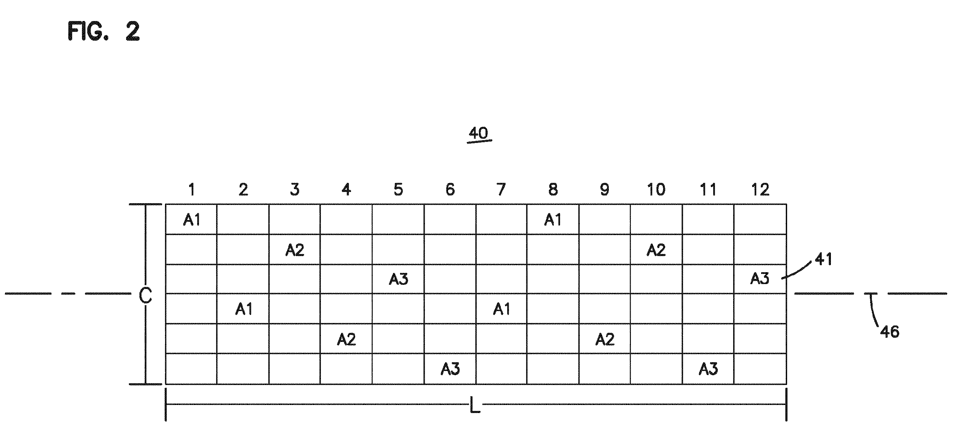

Figure 2 shows another rotary reducing component 40 for a stationary grinder machine. The rotary reducing component 40 includes a plurality of identical reducing elements 41 carried by a drum 42. As depicted, the rotary reducing component 40 is shown in a lay-flat layout with L representative of the length of the drum 42 and C representative of the circumference of the drum. The reducing elements 41 are all identical to one another and are collectively balanced as a whole, relative to an axis of rotation 46 of the drum 42. The reducing elements 41 are also arranged in three balanced subgroups each having the same pattern. For example, reducing elements A1 form a first balanced subgroup, reducing elements A2 form a second balanced subgroup, and reducing elements A3 form a third balanced subgroup. Each of the subgroups is dynamically and statically balanced relative to the axis of rotation 46.

### SUMMARY

Teachings of the present disclosure relate to reducing element layout configurations for a rotary reducing component that allow multiple subsets of reducing elements having different physical properties (e.g., characteristics such as weight/mass, size, shape, robustness, hardness, aggressiveness, abrasion resistance, shock resistance, sharpness, durability, cutting efficiency, reducing styles, etc.) to be populated on a rotor (e.g., a drum, stacked plates, etc.) of the rotary reducing component, without compromising the balance of the rotary reducing component. Each of the subsets can be independently balanced. By selecting reducing elements having desired properties for each subset, the rotary reducing component can be readily customized at the factory, at the dealer, or in the field to satisfy specific customer performance requirements. Example performance requirements include efficiency and durability. Other performance requirements can relate to the material properties of the reduced material desired to be output form the reducing machine (e.g., chips, mulch, high fines, low fines, etc.).

Aspects of the present disclosure relate to rotary reducing components that are balanced as a whole and that also include subsets of reducing elements that are separately balanced. In certain examples, such reducing elements can define a plurality of reducing paths with each of the reducing paths including one or more reducing elements.

Another aspect of the present disclosure relates to rotary reducing components including rotors that carry two or more different styles of reducing elements. In certain examples, the reducing elements having different reducing styles are arranged in subgroups, with each of the subgroups being separately balanced. In certain examples, the different styles of reducing elements can include planar style cutters having chipping edges, blunt-edge style reducing elements having grinding edges defined by carbide tiles or like structures, abrasion resistant reducing elements, impact resistant reducing elements, reducing elements without hard facing, reducing elements with hard facing, rounded blunt-style reducing elements including hard-faced grit, and other styles of reducing elements. In certain examples, the reducing elements are arranged to define a plurality of reducing paths with each reducing path including only one of the reducing elements. In this way, during reducing, the material being reduced is impacted only one time per reducing path for each rotation of the rotary reducing component. In other examples, each reducing path includes multiple reducing elements. In other examples, the reducing elements are arranged to define a plurality of reducing paths with each reducing path including one or multiple reducing elements.

A further aspect of the present disclosure relates to a rotary reducing component having at least first and second balanced subgroups of reducing elements. In certain examples, mounting locations for the reducing elements of the first and second subgroups can be identified through indicia provided on the rotor of the rotary reducing component. In this way, reducing elements having different physical properties can be installed at the mounting locations for the first and second subgroups, without compromising the balance of the rotary reducing component. This can be advantageous for operators in the field that desire to customize the rotary reducing component for effectively reducing certain types of materials, for enhancing efficiency, for enhancing durability, for customizing the consistency of the reduced end product, and for enhancing longevity.

Aspects of the present disclosure relate to balancing strategies and configurations that allow reducing elements having different physical properties to be used at specified locations of a reducing drum so as to provide customized performance. In certain examples, a reducing element selection strategy can relate to using chipping style cutters adjacent a middle region of the drum and grinding style cutters adjacent the ends of the drum. This type of configuration can provide enhanced cutting efficiency at the central region of the drum and enhanced wear resistance at the ends of the drum. In certain examples, combinations of different cutter styles can be used to customize the operating characteristics of the machine such as efficiency, wear resistance and the physical properties of the reduced material generated by the machine.

Another aspect of the present disclosure relates to a rotary reducing component for a material reducing machine. The rotary reducing component includes a rotor structure that rotates about an axis of rotation. The rotary reducing component also includes first and second sets of reducing elements carried by the rotor structure. The rotor structure includes first mounting locations for mounting the reducing elements of the first set to the rotor structure. The first mounting locations are relatively positioned such that the first set of reducing elements is balanced as a set relative to the axis of rotation. The first set of reducing elements has a first set characteristic. The rotor structure also includes second mounting locations for mounting the reducing elements of the second set to the rotor. The second mounting locations are relatively positioned such that the second set of reducing elements is balanced as a set relative to the axis of rotation. The second set of reducing elements has a second set characteristic. The reducing elements define a plurality of reducing paths positioned consecutively along the axis of rotation.

The rotary reducing component is balanced as a whole relative to the axis of rotation, and the first set characteristic is different from the second set characteristic. In certain examples, indicia can be provided on the rotor structure for separately identifying the first mounting locations and the second mounting locations. In certain examples, the first set characteristic is a first layout arrangement of the first mounting locations, and the second set characteristic is a second layout arrangement of the second mounting locations. In certain examples, the first set characteristic is a first physical property of each of the reducing elements of the first set, and the second set characteristic is a physical property of the reducing elements of the second set. In still other examples, the first set characteristic is a first mass, shape, and/or cutting style of each of the reducing elements of the first set, and the second set characteristic is a second mass, shape, and/or cutting style of each of the reducing elements of the second set. In a further example, the first mounting positions are positioned at a central zone of the rotary reducing component, the second mounting positions are positioned at first and second outer zones of the rotary reducing component, and the central zone is positioned between the first and second outer zones. In certain examples, the central zone can have a first style of reducing elements, and the first and second outer zones can have a second style of reducing elements. In certain examples, the first style of reducing elements can be sharper than the second style of reducing elements. In certain examples, the first style of reducing elements can provide a chipping action, while the second style of reducing elements can provide a grinding action. In certain examples, the first style of reducing elements can include planar styled cutters, and the second style of reducing elements can include carbide tiles having relatively blunt edges.

Another aspect of the present disclosure relates to a rotary reducing component including a cutter drum and a plurality of groups of cutting structures carried by the cutter drum. The cutter drum includes a plurality of cutting paths with each cutting path including only one of the cutting structures. In other examples, the cutting paths include one or multiple cutting structures. Each group of cutting structures is independently balanced. The plurality of groups of cutting structures includes at least a first group of cutting structures and a second group of cutting structures. With regard to the first and second groups of cutting structures, at least one of the following is true: (1) the first group of cutting structures is arranged in a first type of layout, the second group of cutting structures is arranged in a second type of layout, and the first type of layout differs from the second type of layout; and (2) the first group of cutting structures individually differs from the second group of cutting structures by at least one of shape and weight. In certain examples, the cutter drum is made up of at least one center balanced group of cutting structures and at least one outer balanced group of cutting structures, wherein the outer balanced group is split by the center balanced group. In certain examples of the present disclosure, the cutter drum can be marked in a manner so that it is possible to tell which group of cutting structures to which each individual cutter is assigned. In certain examples, the first group of cutting structures individually differs from the second group of cutting structures by at least one of shape and weight. In certain examples, the first group of cutting structures is arranged in a first layout arrangement, and the first type of layout arrangement differs from the second type of layout arrangement. In certain examples, the first layout arrangement is a chevron pattern and the second layout arrangement is a non-chevron pattern. In certain examples, at least one of the layout arrangements is a non-symmetrical balanced arrangement.

Still another aspect of the present disclosure relates to a rotary reducing component including a drum and a plurality of reducing elements carried by the drum. The plurality of reducing elements is collectively balanced. The plurality of reducing elements is also arranged in first and second subsets that are independently balanced. The reducing elements of the first subset have a different physical characteristic as compared to the reducing elements of the second subset.

A further aspect of the present disclosure relates to a rotary reducing component including a drum that defines a plurality of reducing element mounting locations. The plurality of reducing element mounting locations is arranged in first and second subsets configured to provide independently balanced first and second subsets of reducing elements when the reducing element mounting locations are populated by reducing elements. The drum can include indicia for differentiating between the mounting locations of the first and second subsets.

A variety of additional aspects will be set forth in the description that follows. The aspects can relate to individual features and to combinations of features. It is to be understood that both the forgoing general description and the following detailed description are exemplary and explanatory only and are not restrictive of the broad concepts upon which the examples disclosed herein are based.

### BRIEF DESCRIPTION OF THE DRAWINGS

The accompanying drawings, which are incorporated in and constitute a part of this disclosure, illustrate various examples of the present disclosure. In the drawings:
Figure 1 is a laid-flat view showing a prior art reducing element layout for the rotary reducing component of a mulching head of a forestry mower;
Figure 2 is a laid-flat view of another prior art reducing element layout for the rotary reducing component of a stationary grinder;
Figure 3 is a perspective view of a forestry mower, in accordance with the principles of the present disclosure;
Figure 4 is a front view of the forestry mower of Figure 3;
Figure 5 is a perspective view of a rotary reducing component of a mulching head of the forestry machine of Figure 3;
Figure 6 is a front view of the rotary reducing component of Figure 5;
Figure 7 is an end view of the rotary reducing component of Figure 5;
Figure 8 is an enlarged detailed view of a portion of Figure 5;
Figure 9 is an enlarged detailed view of a portion of Figure 5;
Figure 10 is a perspective view of a blunt edge, carbide tile style reducing element suitable for use in practicing certain aspects of the present disclosure;
Figure 11 is a perspective view of a sharp edged, planar style reducing element suitable for use in practicing aspects of the present disclosure;
Figure 12 is a perspective view of a sharp edged, planar style reducing element suitable for practicing aspects of the present disclosure, the reducing element of Figure 12 including hard facing directly beneath the cutting edge;
Figure 13 illustrates a blunt, hard-faced grit style reducing element suitable for practicing aspects of the present disclosure;
Figure 14 schematically illustrates an example reducing element layout, in accordance with the principles of the present disclosure;
Figure 15 schematically illustrates another example reducing element layout, in accordance with the principles of the present disclosure;
Figure 16 schematically illustrates a further reducing element layout, in accordance with the principles of the present disclosure;
Figure 17 schematically illustrates still another example reducing element layout, in accordance with the principles of the present disclosure;
Figure 18 schematically illustrates a further example reducing element layout, in accordance with the principles of the present disclosure; and
Figure 19 schematically illustrates another example reducing element layout in accordance with the principles of the present disclosure.

### DETAILED DESCRIPTION

The present disclosure relates to teachings that allow for the customization and enhanced performance of rotary reducing components. In certain examples, various teachings herein relate to independently balancing multiple subsets (i.e., subgroups) of reducing elements on a rotor of a rotary reducing component. In certain examples, indicia can be provided on the rotor to allow mounting locations corresponding to the different subsets to be readily differentiated and identified. In certain examples, reducing elements corresponding to the different subsets can have different physical attributes/characteristics/properties. Teachings of the present disclosure also relate to balancing architectures that allow reducing elements having different physical properties to be populated at different locations on the rotor of the reducing element without compromising the overall balance of the rotary reducing component. Teachings of the present disclosure also allow for the different balanced subsets of reducing elements to be arranged in different layout configurations. The teachings of the present disclosure can also provide enhanced customization of a rotary reducing component in the areas of efficiency and overall performance. Teachings of the present disclosure also allow for multiple balanced sets of reducing elements to be incorporated onto a single drum, even if the reducing elements in a first set have a different mass and/or style/shape than those in a second set.

Certain teachings of the present disclosure relate to a rotary reducing component incorporated within a mulching head of a forestry machine. While a mulching head is specifically depicted, it will be appreciated that the various teachings of the present disclosure are also applicable to other types of reducing machines such as grinders, brush chippers, tub grinders, horizontal grinders, or like machines.

As used herein, a balanced condition of a set of reducing elements exists when the principle inertial axis defined by the set of reducing elements is generally coincident with the axis of rotation of the rotor structure, such that detrimental vibration force or motion is not imparted to the bearings of the rotary structure as a result of centrifugal forces associated with the set of reducing elements. A balanced condition of a rotary reducing component exists when the principle inertial axis defined by the rotary reducing component is generally coincident with the axis of rotation of the rotary reducing component, such that detrimental vibration force or motion is not imparted to the bearings of the rotary reducing component as a result of the centrifugal forces.

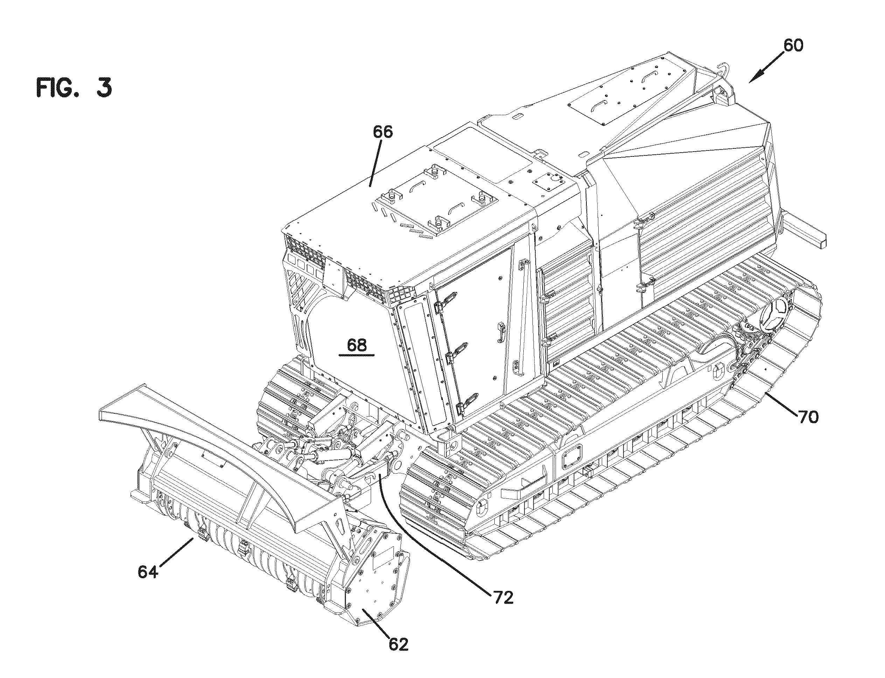

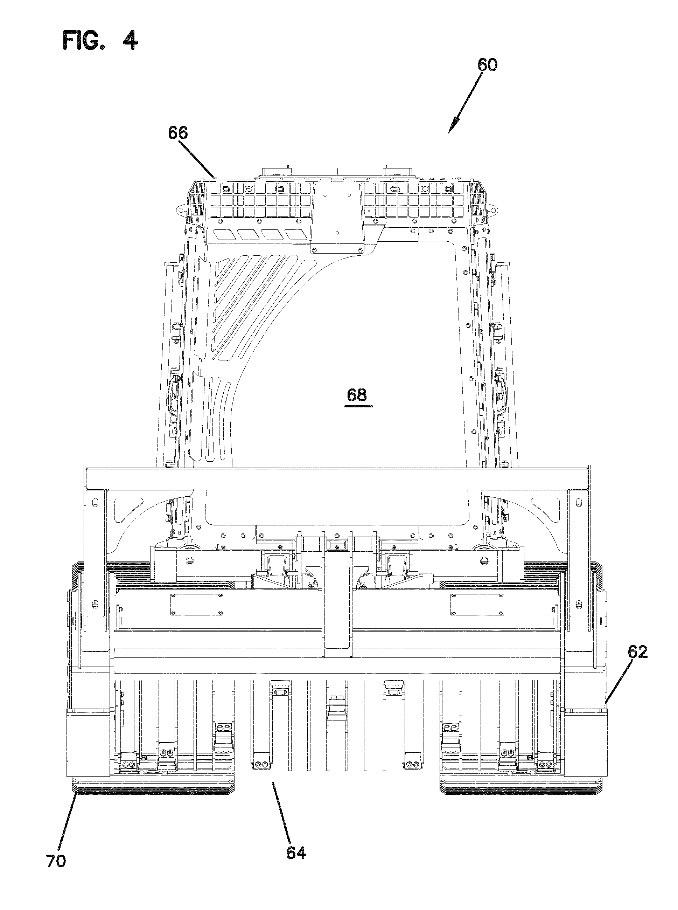

Figures 3 and 4 depict a forestry mower 60 including a mulching head 62 that has a rotary reducing component 64, in accordance with the principles of the present disclosure. The forestry mower 60 includes a vehicle 66 having a chassis 68 supported on tracks 70 or wheels. A boom arrangement 72 couples the mulching head 62 to the chassis 68. The boom arrangement 72 is configured to raise and lower the mulching head 62 relative to the chassis 68 and also allows the mulching head 62 to be pivoted forwardly and rearwardly.

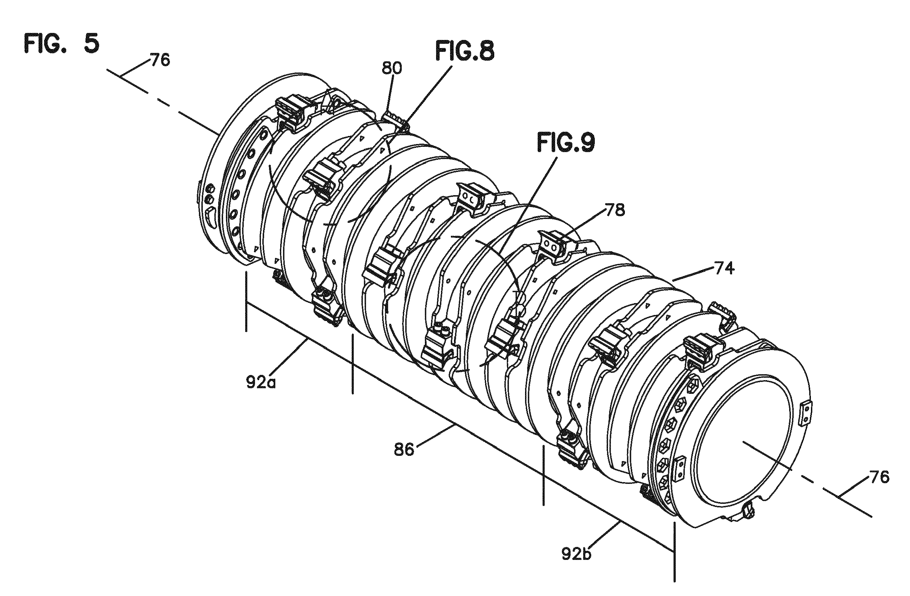

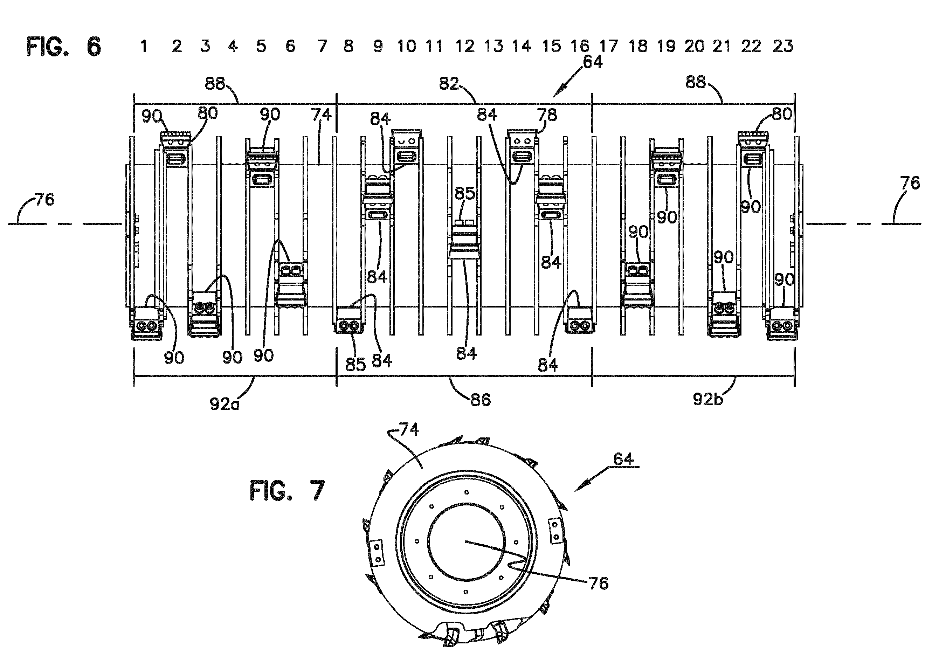

Referring to Figures 5-7, the rotary reducing component 64 includes a rotor 74 (e.g., a drum) that rotates about a central axis of rotation 76. A plurality of reducing elements is carried on the rotor 74. The plurality of reducing elements includes reducing elements 78 and reducing elements 80. The reducing elements 78 form a first subset 82 of reducing elements that are balanced relative to the axis of rotation 76. The reducing elements 78 of the first subset 82 are mounted at first mounting locations 84 positioned at a central region 86 of the rotor 74. The reducing elements 80 form a second subset 88 of reducing elements that are balanced relative to the central axis of rotation 76. The reducing elements 80 of the second subset 88 are mounted to the rotor 74 at second mounting locations 90 positioned at first and second outer end regions 92a, 92b of the rotor 74. The central region 86 is positioned axially between the outer end regions 92a, 92b.

It will be appreciated that the rotary reducing component 64 as a whole is balanced relative to the axis of rotation 76. Additionally, the reducing elements 78, 80 are collectively balanced relative to the central axis of rotation 76. Moreover, the reducing elements 78 of the first subset 82 are separately balanced as a set relative to the axis of rotation 76, and the reducing elements 80 of the second subset 88 are separately balanced as a set relative to the central axis of rotation 76.

In the depicted embodiment, the rotary reducing component 64 includes twenty-three reducing paths labeled 1-23 that are positioned consecutively along the central axis of rotation 76. Reducing paths 1-7 correspond to the first outer end region 92a and reducing paths numbered 17-23 correspond to the second outer end region 92b. Reducing path numbers 8-15 correspond to the central region 86. Each of the cutting paths is defined by or coincides with a single one of the reducing elements. For example, single reducing elements 80 are provided for each of the reducing paths 1-7 and 17-23. Similarly, a single one of the reducing elements 78 is provided for each of the reducing paths 8-16. In this type of configuration, the reducing elements are configured such that each of the reducing paths makes one cut per revolution of the rotor 74 about the axis of rotation 76 during reducing operations.

In other embodiments, each reducing path can include more than one reducing element (not shown). In this type of configuration, the reducing elements are configured such that each of the reducing paths makes one more than one cut per revolution of the rotor 74 about the axis of rotation 76 during reducing operations.

In certain examples, the first subset 82 and the second subset 88 can have different set characteristics. For example, the reducing elements 78 of the first subset 82 can have different physical properties (examples identified above) than the reducing elements 80 of the second subset 88. Additionally, the reducing elements 78 of the first subset 82 can be arranged on the drum in a different layout or pattern as compared to the reducing elements 80 of the second subset 88. Also, in the embodiments where the reducing paths include more than one reducing element, each reducing element in the each reducing path can have different physical properties.

In certain examples, the reducing elements 78 can be sharper than the reducing elements 80. In certain examples, reducing elements 78 can be configured to generate a chipping action while the reducing elements 80 can be configured to generate a grinding action. In certain examples, the rotary reducing component 64 is configured to make one cut per reducing path for each rotation of the rotary reducing component 64 about the axis of rotation 76.

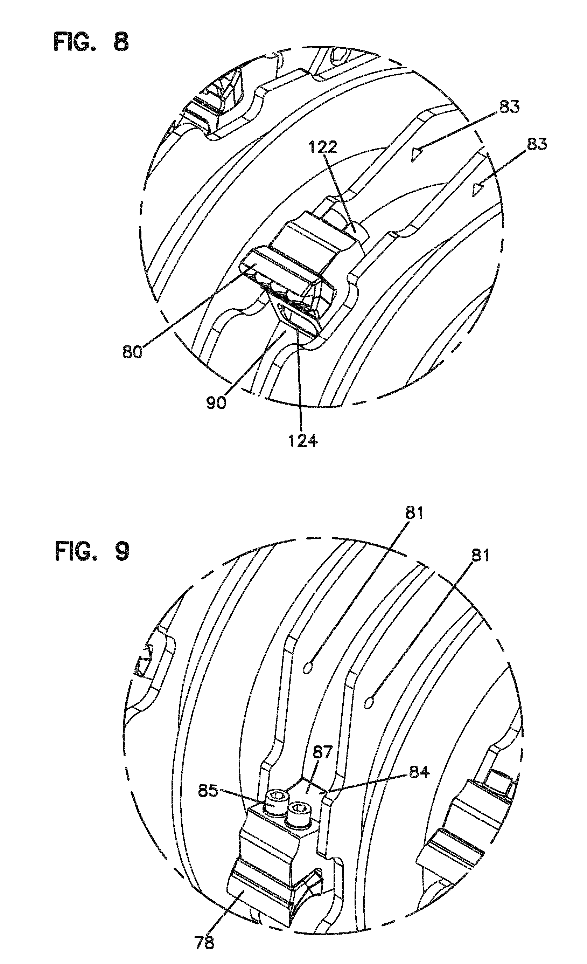

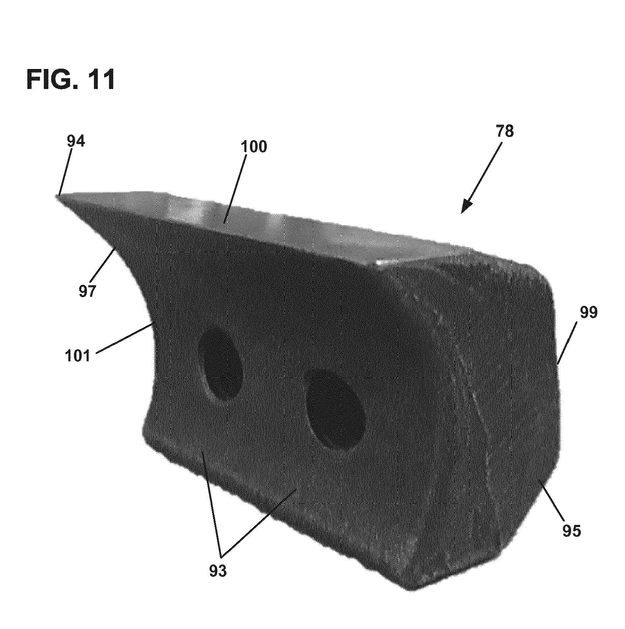

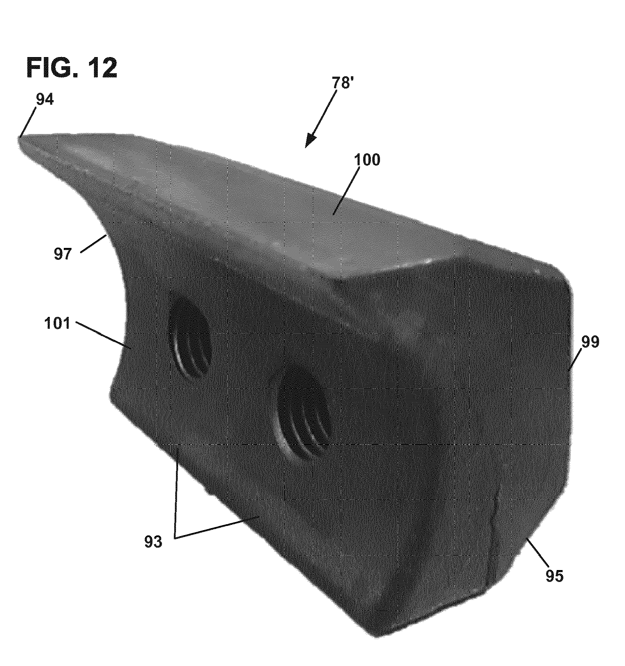

As depicted at Figures 5-7, the reducing elements 78 are shown as relatively sharp, planar cutters suitable for chipping. As shown at Figure 11, each of the reducing elements 78 includes a main body 95 having a leading face 97 and a trailing face 99. The main body 95 defines fastener openings 93 (e.g., internally threaded bolt openings) that extend though the main body 95 from the leading face 97 to the trailing face 99. The main body 95 also includes a planar outer surface 100 and an inner surface 101. The leading face 97 can be concave and a chipping edge 94 is defined at an interface between the leading face 97 and the planar outer surface 100. The edge 94 can be relatively sharp and can extend generally across an entire width of a main body of the reducing element 78. The fastener openings 93 are configured for use in fastening the reducing elements 78 to one of the first mounting locations 84 with fasteners 85 such as bolts. The first mounting locations 84 can include cutter mounts 87 to which the reducing elements 78 are secured by the fasteners 85 (see Figure 9). When the reducing element 78 is secured to the cutter mount 87, the trailing face 99 abuts against the cutter mount and the inner surface 101 faces toward the axis of rotation 76. Figure 12 shows another chipping cutter 78' having the same basic configuration as the reducing element 78, except a laser hard facing has been added on the underside of the edge 94 to enhance the robustness of the reducing element and to encourage self-sharpening of the edge 94.

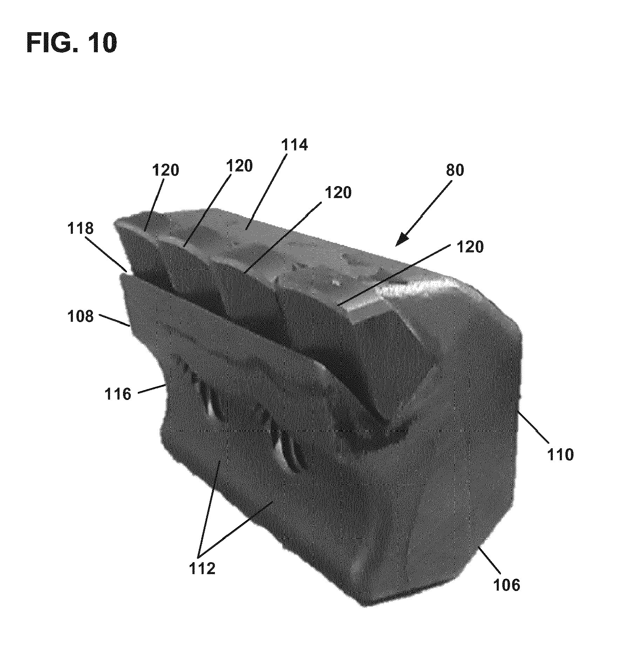

As depicted at Figures 5-7, the reducing elements 80 of the second subset 88 are shown as blunt edge tile-type cutters suitable for grinding. As shown at Figure 10, each of the reducing elements 80 includes a main body 106 having a leading face 108, a trailing face 110, and fastener openings 112 (e.g., internally threaded bolt openings) that extend through the main body 106 from the leading face 108 to the trailing face 110. The reducing element 80 also includes an outer face 114 and an inner face 116. The main body 106 defines a pocket 118 generally at the interface between the outer face 114 and the leading face 108. A plurality of blunt edged tiles or inserts 120 is secured side-by-side within the pocket 118. The inserts 120 can be manufactured of a hard, wear-resistant material such as a carbide (e.g., tungsten carbide, cubic boron carbide) or another wear-resistant and/or abrasive ceramic material (e.g., alumina). For example, the inserts 120 can be carbide tiles. In certain examples, the material for the inserts 120 can be selected to provide a desired operating characteristic such as abrasion resistance and/or impact resistance. As shown at Figure 8, each reducing element 80 is secured to a corresponding one of the second mounting locations 90 by fasteners 122, such as bolts. Specifically, the fasteners 122 can be used to secure the reducing elements 80 to cutter mounts 124 provided at each of the second mounting locations 90. As so mounted, the trailing face 110 abuts against the cutter mount, and the inner face 116 faces toward the axis of rotation 76.

It will be appreciated that the first and second mounting locations 84, 90 can be provided with indicia, thereby facilitating identifying the mounting locations 84, 90 as being part of the first subset 82 or the second subset 88, respectively. It will be appreciated that the indicia can be provided on the rotor 74. For example, the indicia can include symbols, markings, letters, numbers, or other indicators that are embossed, engraved, printed or otherwise provided on the rotor 74. As shown at Figure 9, circular markings 81 are provided adjacent to the first mounting locations 84 to provide a clear indication that the first mounting locations 84 are part of the first subset 82. Similarly, triangular markings 83 are provided at the second mounting locations 90 to provide a visual indication that the second mounting locations 90 are part of the second subset 88. In other examples, the lack of indicia may provide an indication of a certain subset. For example, unmarked mounting locations could correspond to a first subset while marked mounting locations could correspond to a second subset. In still other examples, a template can be used to identify which mounting locations correspond to the different subsets. The template could be provided in any suitable format, such as paper (e.g., in an operator's manual), electronic, or part of a decal attached to the forestry mower 60.

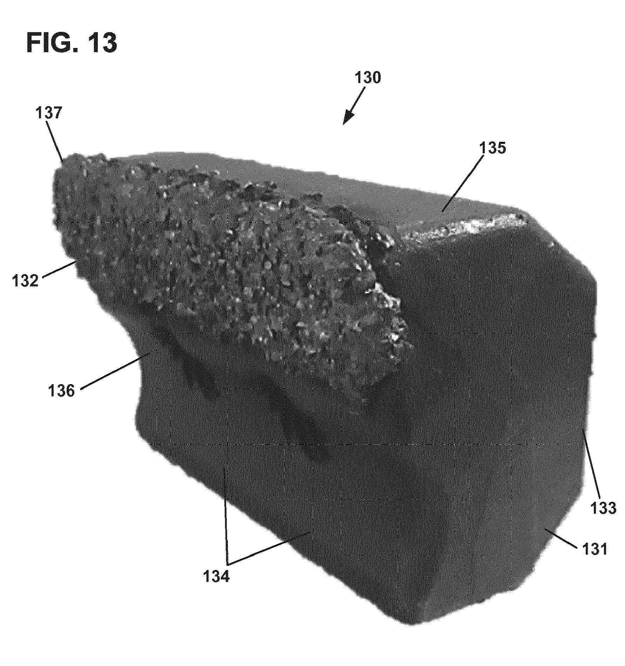

Figure 13 is an example of another reducing element 130 that can be incorporated into the rotary reducing component 64. For example, the reducing element 130 can be used to populate the second mounting locations 90 such that the reducing elements 130 form the second subset 88 of reducing elements. As depicted, the reducing element 130 includes a main body 131 having a leading face 132 and a trailing face 133. Fastener openings 134 (e.g., internally threaded bolt openings) extend through the main body 131 from the leading face 132 to the trailing face 133. The main body 131 also includes an outer face 135 and an inner face 136. A blunt edge 137 is defined at the interface between the outer face 135 and the leading face 132. The blunt edge 137 extends across an entire width of the leading face 132 and is shown covered with hard-facing grit. It will be appreciated that the reducing elements 130 can be fastened to the cutter mounts of the second mounting locations 90.

During normal use, trees and brush are typically fed toward the central region 86 of the rotary reducing component 64. Therefore, by providing more aggressive chipping style cutters at this region, the overall efficiency of the machine can be enhanced. The first and second outer end regions 92a, 92b can often encounter more abrasive debris. Therefore, by providing such regions with less aggressive, grinding type cutters, the overall longevity of the rotary reducing component 64 can be enhanced. In other examples, other combinations of reducing elements can be utilized. For example, in certain examples for certain types of materials, it may be desirable for less aggressive reducing elements to be used in the central region 86 and more aggressive reducing elements to be used at the outer end regions 92a, 92b. In still other examples, different styles of relatively sharp chipping cutters can be used at both the first and second mounting locations 84, 90 such that a first style of chipping blades form the first subset 82, and a second style of chipping blades form the second subset 88. For example, hardened and/or hardfaced chipping cutters can be used at one of the first or second mounting locations 84, 90 and non-hardened and/or non-hard-faced chipping cutters can be used at the other of the first and second mounting locations 84, 90. In still further examples, grinding style cutters can be used at both the first and second mounting locations 84, 90, such that both the first and second subsets 82, 88 provide a grinding function. For example, a first style of grinding cutter can be used to form the first subset 82, and a second style of grinding cutter can be used to form the second subset 88. In certain examples, a hardened and/or hard-faced grinding cutter can be used to form one of the first and second subsets 82, 88 and a non-hardened and/or non-hard-faced grinding cutter can be used to form the other of the first and second subsets 82,88.

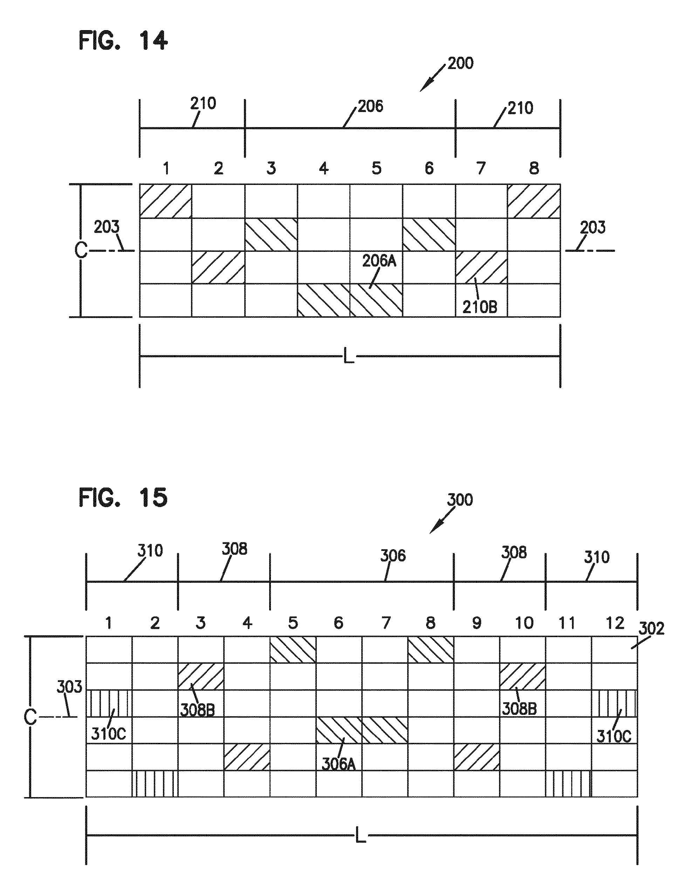

Figure 14 is a diagrammatic, laid-flat view of another rotary reducing component 200, in accordance with the principles of the present disclosure. The rotary reducing component 200 includes a drum 202 having a length L and a circumference C. The drum 202 rotates about an axis of rotation 203. As depicted, for the purpose of schematic illustration, the drum 202 is shown including eight single cut reducing paths spaced along the length L of the drum 202. The rotary reducing component 200 also includes a first balanced subset 206 of reducing elements 206a and a second balanced subset 210 of reducing elements 210b. The first and second subsets 206, 210 of reducing elements are independently balanced, and all of the reducing elements are also collectively balanced. The first balance subset 206 is located at a central axial region of the drum 202, and the second balanced subset 210 is located at the axial ends of the drum 202. The first and second balanced subsets 206, 210 can have different set properties. For example, the reducing elements 206a of the first subset 206 can have a different physical property as compared to the reducing elements 210b of the second subset 210, and/or the first balanced subset 206 can have a different reducing element layout than the second balanced subset 210. While both of the subsets 206, 210 are depicted having chevron patterns, the patterns are different because the chevron pattern of the first balanced subset 206 is more axially compressed than the chevron pattern of the second balanced subset 210. In other examples, the same reducing elements can be used to populate the mounting locations of both the first and second balanced subsets. Both layouts are symmetric relative to a mid-plane P that bisects the drum 202 and is perpendicular relative to the axis of rotation 203.

Figure 15 shows a further rotary reducing component 300, in accordance with the principles of the present disclosure. The rotary reducing component 300 is shown in a diagrammatic, laid-flat view. The rotary reducing component 300 includes a drum 302 having a length L and a circumference C. The drum rotates about an axis of rotation 303. The drum 302 is shown including a plurality of parallel single cut reducing paths spaced along the length L of the drum 302. The drum 302 carries a first balanced subset 306 of reducing elements 306a, second balanced subset 308 of reducing elements 308b, and a third balanced subset 310 of reducing elements 310c. The first balanced subset 306 is located at a central region of the drum 302, the third balanced subset 310 is located adjacent outermost ends of the drum 302, and the second balanced subset 308 is positioned between the first balanced subset 306 and the third balanced subset 310. Each of the balanced subsets 306, 308, 310 has a reducing element layout that forms a chevron pattern. However, each of the layouts is different because the layout of the second balanced subset 308 is narrower than the third balanced subset 310, and the layout of the first balanced subset 306 is narrower than the second balanced subset 308. All of the layouts are symmetric relative to a mid-plane P that bisects the drum 302 and is perpendicular relative to the axis of rotation 303. In this example, each of the balanced subsets 306, 308, 310 can be populated with reducing elements having different physical properties. In certain examples, at least one of the balanced subsets 306, 308, 310 has reducing elements with different physical properties than the reducing elements populating the other of the balanced subsets. In certain examples, reducing elements having the same physical properties can be used to populate all of the subsets 306,308,310.

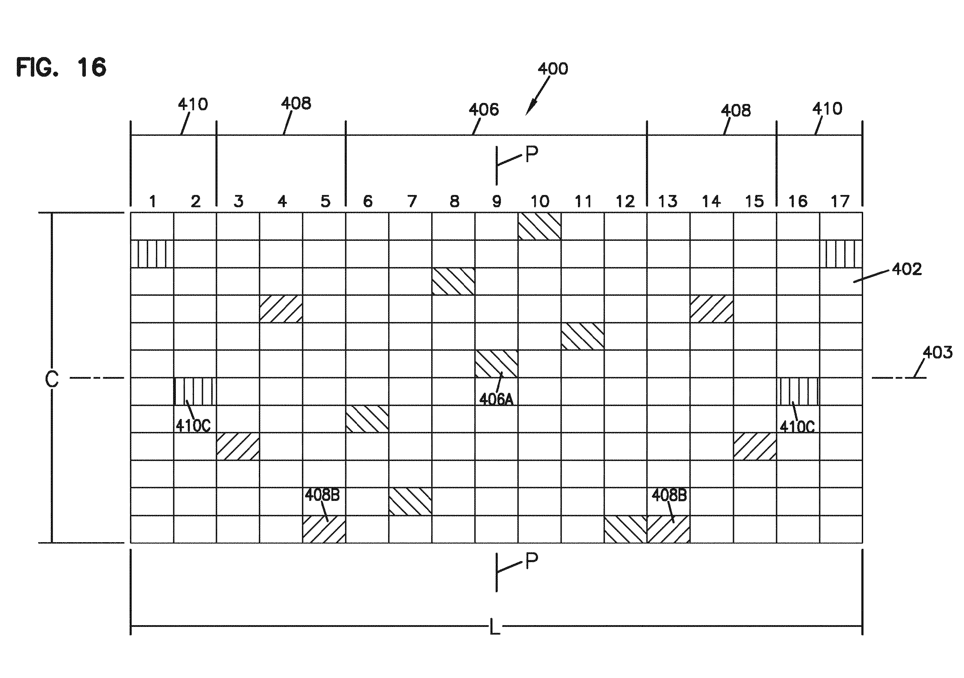

Figure 16 shows still another rotary reducing component 400, in accordance with the principles of the present disclosure. The rotary reducing component 400 is shown in a diagrammatic, laid-flat view. The rotary reducing component 400 includes a drum 402. The drum carries a first balanced subset 406 of reducing elements 406a, a second balanced subset 408 of reducing elements 408b, and a third balanced subset 410 of reducing elements 410c. In this example, the third balanced subset 410 is arranged in a chevron layout. The drum has a length L and a circumference C. The rotary reducing component 400 includes a plurality of reducing paths each including one reducing element. The first balanced subset 406 is positioned at a central region of the drum 402. The third balanced subset 410 is positioned adjacent outermost ends of the drum 402, and the second balanced subset 408 is positioned between the first balanced subset 406 and the third balanced subset 410. In certain examples, the reducing elements 406a, 408b, 410c can each have different physical properties. In other examples, the reducing elements 406a, 408b, 410c may have the same physical properties. In still other examples, at least one of the reducing elements 406a, 408b, 410c has different physical properties than the others of the reducing elements 406a, 408b, 410c.

It will be appreciated that the first, second and third balanced subsets 406, 408, 410 each have different reducing element layouts. For example, the third balanced subset 410 includes four reducing elements arranged in a chevron pattern. The second balanced subset 408 includes six reducing elements arranged in a non-chevron shaped arrangement that is symmetric about a mid-plane P that bisects the drum 402 and that is perpendicular to a central rotational axis 403 of the drum 402. The first balanced subset 406 includes seven reducing elements that are arranged in a layout that is non-symmetric about the mid-plane P. In certain examples, the layouts of a given balanced subset can have an even number of reducing elements arranged in a symmetric configuration relative to the mid-plane P. In other examples, the reducing elements of a given balanced subset can have a non-symmetric layout in respect to the mid-plane P. In certain examples, a given balanced subset can have an odd number of reducing elements.

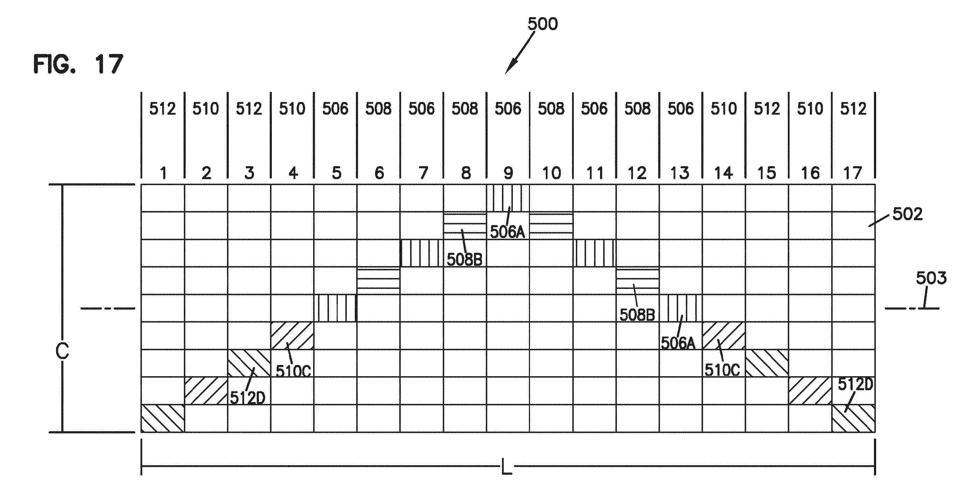

Figure 17 shows a rotary reducing component 500, in accordance with the principles of the present disclosure. The rotary reducing component is depicted diagrammatically in a laid-flat view. The rotary reducing component 500 includes a drum 502 having a circumference C and a length L. The rotary reducing component 500 includes a plurality of reducing paths spaced along an axis of rotation 503 of the rotary reducing component 500. Each of the rotary reducing paths includes a single rotary reducing element. In the depicted embodiment, the rotary reducing component 500 includes a first balanced subset 506 having reducing elements 506a, a second balanced subset 508 having reducing elements 508b, a third balanced subset 510 having reducing elements 510c, and a fourth balanced subset 512 having reducing elements 512d. The reducing elements 506a, 508b, 510c, 512d cooperate to define a single chevron pattern. In certain examples, the reducing elements 506a, 508b, 510c, 512d all have different physical properties. As shown at Figure 17, the reducing elements 506a alternate with the reducing elements 508b and the reducing elements 510c alternate with the reducing elements 512d.

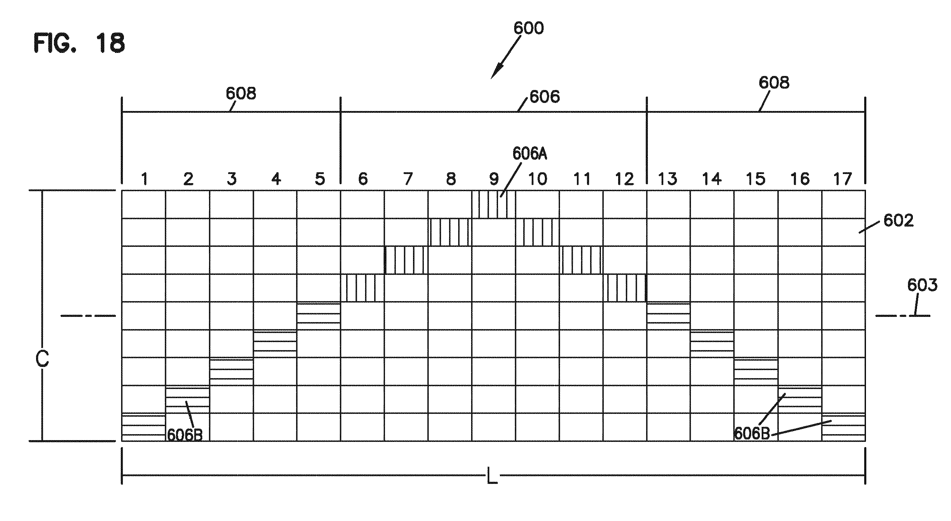

Figure 18 shows another rotary reducing component 600, in accordance with the principles of the present disclosure. The rotary reducing component 600 is shown in a diagrammatic, laid-flat view. The rotary reducing component 600 includes a drum 602 having a length L and a circumference C. The rotary reducing component 600 includes a plurality of reducing paths positioned consecutively along an axis of rotation 603 of the rotary reducing component 600. The drum 602 carries a first balanced subset 606 of reducing elements 606a and a second balanced subset 608 of reducing elements 608b. The first balanced subset 606 is positioned at a central region of the drum 602, and the second balanced subset 608 is positioned adjacent first and second end portions of the drum 602. The central portion is positioned between the first and second end portions of the drum 602. In certain examples, the reducing elements 606a have different physical characteristics than the reducing elements 608b. In certain examples, the reducing elements 606a are more aggressive and provide more of a chipping action, as compared to the reducing elements 608b. The first and second balanced subsets 606 and 608 cooperate to define a single chevron pattern.

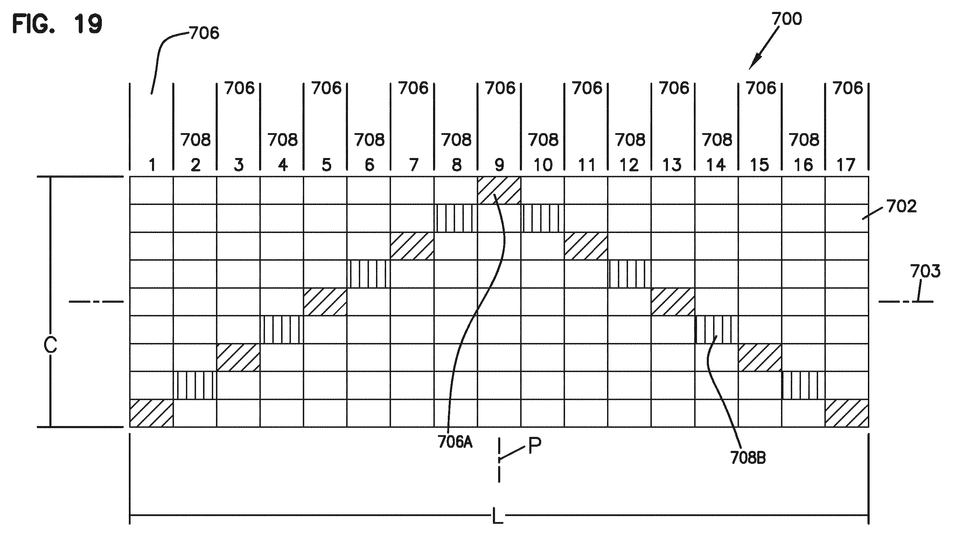

Figure 19 shows still another rotary reducing component 700, in accordance with the principles of the present disclosure. Rotary reducing component 700 is shown in a diagrammatic, laid-flat view. The rotary reducing component 700 includes a drum 702 that rotates about a longitudinal axis 703. The drum 702 carries a first balance subset 706 of reducing elements 706a and a second balanced subset 708 of reducing elements 708b. The first and second balanced subsets 706, 708 cooperate to define a single chevron pattern. The reducing elements 706a of the first balanced subset 706 alternate with the reducing elements 708b of the second balanced subset 708 as the single chevron pattern extends away from a mid-plane P that bisects the drum 702 and that is perpendicular to the axis of rotation 703.

It will be appreciated that the various laid-flat views depicted herein are diagrammatic in nature and are not to scale. Further, the depicted rows are not intended to be indicative of equally spaced rows about the drum circumference. Therefore, it will be appreciated that the circumferential positioning of the various reducing elements is schematic in nature and may not be representative of an exact angular position of the various reducing elements about the axis of rotation of the rotary reducing component. In certain examples, uneven spaced rows and columns can be used. It will be appreciated that certain schematic depictions disclosed herein have subgroups that would be unbalanced if construed literally, but that one of skill in the art would readily understand that the depictions represent schematic, high level layout strategies rather than scaled design drawings, and that the determination of the exact angular positions necessary to achieve dynamic and static balancing for a given general layout is well within the understanding of those skilled in the art.

## Claims

1. A rotary reducing component comprising:
a drum; and
the drum defining a plurality of reducing element mounting locations, the plurality of reducing element mounting locations being arranged in first and second subsets configured to provide independently balanced first and second subsets of reducing elements when the reducing element mounting locations are populated by reducing elements, the drum including indicia for differentiating between the mounting locations of the first and second subsets.

2. The rotary reducing component of claim 1, wherein the first subset has a first lay-out arrangement, and the second subset has a second layout arrangement, and wherein the first layout arrangement and second layout arrangement are different.

3. The rotary reducing component of claim 1, wherein the first subset has a first weight of each of the reducing elements of the first subset, and wherein the second subset has a second weight of each of the reducing elements of the second subset.

4. The rotary reducing component of claim 1, wherein the first subset has a first shape of each of the reducing elements of the first set, and wherein the second subset has a second shape of each of the reducing elements of the second set.

5. The rotary reducing component of claim 1, wherein the first subset has a first reducing characteristic of each of the reducing elements of the first subset, and wherein the second subset has a second reducing characteristic of each of the reducing elements of the second subset.

6. A rotary reducing component for a material reducing machine, the rotary reducing component comprising:
a rotor structure that rotates about an axis of rotation;
a first set of reducing elements carried by the rotor structure, the rotor structure including first mounting locations for mounting the reducing elements of the first set to the rotor structure, the first mounting locations being relatively positioned such that the first set of reducing elements is balanced as a set relative to the axis of rotation, and the first set of reducing element having a first set characteristic;
a second set of reducing elements carried by the rotor structure, the rotor structure including second mounting locations for mounting the reducing elements of the second set to the rotor structure, the second mounting locations being relatively positioned such that the second set of reducing elements is balanced as a set relative to the axis of rotation, and the second set of reducing elements has a second set characteristic;
wherein the reducing elements define a plurality of reducing paths positioned consecutively along the axis of rotation, wherein the rotary reducing component is also balanced as a whole relative to the axis of rotation, and wherein the first set characteristic is different from the second set characteristic in at least physical characteristics.

7. The rotary reducing component of claim 6, further comprising indicia on the rotor structure for separately identifying the first mounting locations and the second mounting locations.

8. The rotary reducing component of claim 6, wherein the first set characteristic is a first weight of each of the reducing elements of the first set, and wherein the second set characteristic is a second weight of each of the reducing elements of the second set.

9. The rotary reducing component of claim 6, wherein the first set characteristic is a first shape of each of the reducing elements of the first set, and wherein the second set characteristic is a second shape of each of the reducing elements of the second set.

10. The rotary reducing component of claim 6, wherein the first set characteristic is a first reducing characteristic of each of the reducing elements of the first set, and wherein the second set characteristic is a second reducing characteristic of each of the reducing elements of the second set.

11. The rotary reducing component of claim 6, wherein the first mounting positions are positioned at a central zone of the rotary reducing component, and wherein the second mounting positions are positioned at first and second outer zones of the rotary reducing component, the central zone being positioned between the first and second outer zones.

12. The rotary reducing component of claim 6, wherein the reducing elements of the first set are alternated with the reducing elements of the second set along a length of the rotor structure.

13. A rotary reducing component comprising:
a cutter drum; and
a plurality of groups of cutting structures carried by the cutter drum, the cutter drum including a plurality of cutting paths with each cutting path including only one of the cutting structures, each group of cutting structures being independently balanced, wherein the plurality of groups of cutting structures include at least a first group of cutting structures and a second group of cutting structures, further wherein at least one of the following is true:
the first group of cutting structures is arranged in a first type of layout, the second group of cutting structures being arranged in a second type of layout, the first type of layout differing from the second type of layout, and
the first group of cutting structures individually differs from the second group of cutting structures by at least one of shape and weight.

14. The rotary reducing component of claim 13, wherein the first group of cutting structures is positioned at a central zone of the rotary reducing component, and wherein the second group of cutting structures is positioned at first and second outer zones of the cutting structure, the central zone being positioned between the first and second outer zones.

15. The rotary reducing component of claim 13, wherein the cutting structures of the first group are alternated along a length of the cutter drum with the cutting structures of the second group.

16. The rotary reducing component of claim 13, further comprising indicia on the rotary reducing component for separately identifying a first mounting location for the first group of cutting structures from a second mounting locations for the second group of cutting structures.

17. The rotary reducing component of claim 13, wherein the first group of cutting structures is arranged in a first layout, the second group of cutting structures is arranged in a second layout, the first layout differing from the second layout.

18. The rotary reducing component of claim 17, wherein the first group of cutting structures is individually the same as the second group of cutting structures in at least one of shape and weight.

19. The rotary reducing component of claim 17, wherein the first group of cutting structures is a chevron layout, and the second group of cutting structures is a non-chevron layout.

20. The rotary reducing component of claim 13, wherein at least one of the plurality of groups of cutting structures is arranged in a non-symmetrical balanced layout.

21. A rotary reducing component comprising:
a drum; and
a plurality of reducing elements carried by the drum, the plurality of reducing elements being collectively balanced, the plurality of reducing elements being arranged in first and second subsets that are independently balanced, the reducing elements of the first subset having a different physical characteristic than the reducing elements of the second subset.
